# EUROPEAN PATENT APPLICATION

(11) **EP 2 199 431 A1**
(43) Date of publication of application: **23.06.2010**
(21) Application number: 09275119.7
(22) Date of filing: 01.12.2009
(51) Int. Cl.: C25B 9/06, F02M 25/12

(54) **A hydrogen-oxygen generating apparatus**

(30) Priority: 02.12.2008 KR 20080121190
(71) Applicant: Hwang, Boo-Sung, Kyung-ki do (KR)
(72) Inventor: Hwang, Boo-Sung, Kyung-ki do (KR)
(74) Representative: Hocking, Adrian Niall

(57) **Abstract**

This invention is about a hydrogen-oxygen generating apparatus which contains an insulation tube(20) inside the thin walled tube (10), multiple 1^{st} electrolyte plate (31) that has the 1^{st} small hole (31c) placed at the lower part of the center hole (31a) and the first big hole (31b) place on the upper part of the center hole (31a), multiple 2^{nd} electrolyte plates(32) with the small hole (32c) on the upper part of the center hole (32a) and the 2^{nd} big hole (32b) on the lower part of the center hole (32b), a number of rings with a certain thickness (33) between the 1^{st} electrolyte plate (31) and the 2^{nd} electrolytc plate(32), the electrolyte unit (30) including the 1^{st} electric pole (34) penetrating the 1^{st} small holes (31c) and the 2^{nd} electric pole (35) penetrating the 2^{nd} small holes (32c) as the 1^{st} electrolyte plate (31) and the 2^{nd} electrolyte plate (32) are place opposed to each other, the front cover (40) with the frontal water flowing pipe (41) at the center and the 1^{st} electric pole (34) and the 2^{nd} electric pole (35) piercing the cover through the 1,2^{nd} pipes (44)(45) up and down the cover in front of the thin walled tube (10), the rear cover (50) with the 1^{st} electric pole (34) and 2^{nd} electric pole (35) piecing through the 3,4^{th} pipes (54)(55) at the upper and lower part of the rear water flowing pipe (51) at the center of the rear cover (50) at the back of the thin walled tube (10), and insulating gaskets (47)(57) on the 1,2^{nd} electric pole (34)(35) connecting the 1,2^{nd} pipes (44)(45) and the 3,4rh pipes (54)(55).

## Description

### Technical Field

The present invention is about a hydrogen-oxygen generator that can produce hydrogen-oxygen mixture effectively from water.

### Background

Hydrogen-oxygen mixed-gas generating system is made to produce hydrogen and oxygen from electrolyzed water; to gain hydrogen-oxygen mixed gas, water containing small amount of electrolytes is provided to the storage with positive (+) and negative (-) electrodes and electrolyzed by direct current. Hydrogen and oxygen produced from the process is at ratio of 2 : 1 and hydrogen is formed as bubbles on the surface of negative (-) electrode and oxygen in bubbles on the positive (+) electrode. The hydrogen and oxygen produced can be mixed and combusted. Also hydrogen- oxygen gas mixture does not produce any pollutants when ignited, making it an important eco-friendly energy source

However, because the amount of hydrogen-oxygen produced is relatively small compared to the amount of electric current transferred to (-) and (+) electrodes, additional gas, such as propane gas, is added and combusted, resulting in low economical efficiency.

### Problem to be solved

The invention is created to solve the above mentioned problem; to provide economical hydrogen-oxygen mixed gas generator by expanding the produced amount of hydrogen-oxygen gas mixture compared to the amount of electricity used.

### Brief Description of the Drawings

Diagram 1 is a sketch of hydrogen-oxygen mixed gas generator;
Diagram 2 is a sketch of dissembled hydrogen-oxygen mixed gas generator;
Diagram 3 is a sectional sketch along the diagram 1's III-III'.

### The Method of Solution

The hydrogen-oxygen generator produced to solve the above problem contains a caliber, a metal thin walled tube (10), an insulation tube(20) inside the thin walled tube (10), multiple 1^{st} electrolyte plate (31) that has the 1^{st} small hole (31c) placed at the lower part of the center hole (31a) and the first big hole (31b) place on the upper part of the center hole (31a), multiple 2^{nd} electrolyte plates(32) with the small hole (32c) on the upper part of the center hole (32a) and the 2^{nd} big hole (32b) on the lower part of the center hole (32b), a number of rings with a certain thickness (33) between the 1^{st} electrolyte plate (31) and the 2^{nd} electrolyte plate(32), the electrolyte unit (30) including the 1^{st} electric pole (34) penetrating the 1^{st} small holes (31c) and the 2^{nd} electric pole (35) penetrating the 2^{nd} small holes (32c) as the 1^{st} electrolyte plate (31) and the 2^{nd} electrolyte plate (32) are place opposed to each other, the front cover (40) with the frontal water flowing pipe (41) at the center and the 1^{st} electric pole (34) and the 2^{nd} electric pole (35) piercing the cover through the 1,2^{nd} pipes (44)(45) up and down the cover in front of the thin walled tube (10), the rear cover (50) with the 1^{st} electric pole (34) and 2^{nd} electric pole (35) piecing through the 3,4^{th} pipes (54)(55) at the upper and lower part of the rear water flowing pipe (51) at the center of the rear cover (50) at the back of the thin walled tube (10), insulating gaskets (47)(57) on the 1,2^{nd} electric pole (34)(35) connecting the 1,2^{nd} pipes (44)(45) and the 3,4rh pipes (54)(55), and the heat radiant plate (60) containing a number of heat radiant pins (62).

### The Effect

According to the developed hydrogen-oxygen mixed gas generator the amount of hydrogen-oxygen mixed gas produced can be increased relative to the amount of electricity used and economical efficiency for the gas can be combusted without adding any additional gas, such as propane gas.
Also, hydrogen and oxygen are formed in bubble forms can be easily removed from the electrodes. As a result, the surface area of the electrodes is enlarged, amplifying the electrolysis efficiency.

### Specific explanation for realization of the invention

The following explanations are based on the diagrams attached.

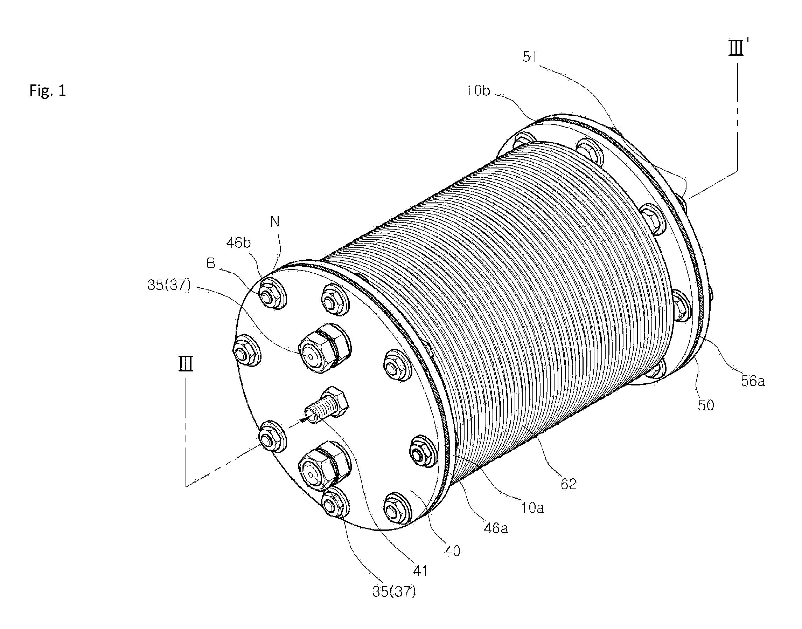

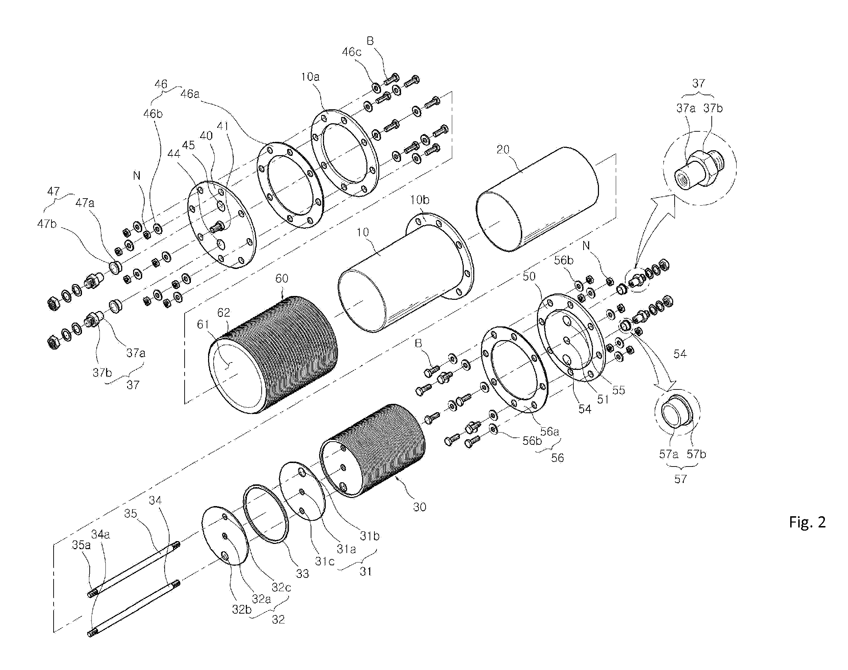

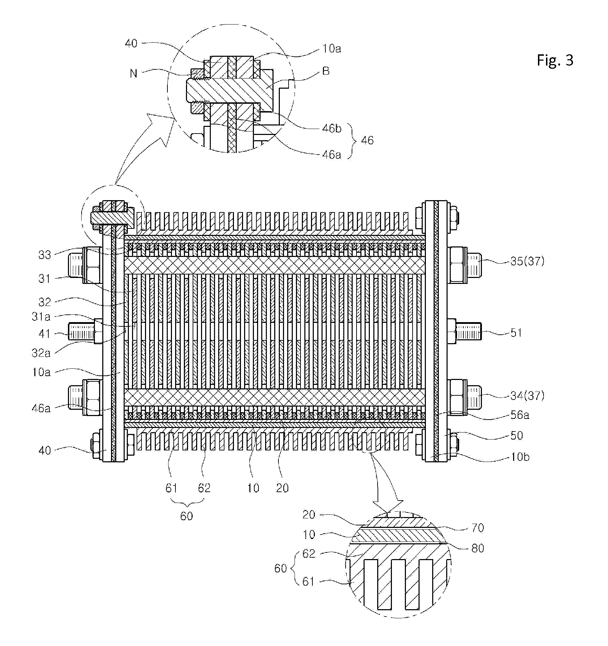

Diagram 1 is the whole sketch of the hydrogen-oxygen generator, the diagram 2 is the disjointed sketch of the generator, and the diagram 3 is the sectional view along the diagram 1's III-III.

As drawn, the hydrogen-oxygen mixed gas generator following the invention a round metal thin walled tube (10), multiple the 1^{st} electrolyte plates (31) with the 1^{st} small hole (31c) and the 1^{st} big hole (31b) each on the upper and lower part of the center hole (31a),multiple 2^{nd} electrolyte plates(31) with the small hole (32c) on the upper part of the center hole (32a) and the 2^{nd} big hole (32b) on the lower part of the center hole (32b), a number of rings with certain thickness (33) between the 1^{st} electrolyte plate(31) and the 2^{nd} electrolyte plate (32), electrolyte unit (30) including the 1^{st} electric pole (34) penetrating the 1^{st} small holes (31c) and the 2^{nd} electric pole (35) penetrating the 2^{nd} small holes (32c) as the 1^{st} electrolyte plate (31) and the 2^{nd} electrolyte plate (32) are place opposed to each other, the front cover (40) with the frontal water flowing pipe (41) at the center and the 1^{st} electric pole (34) and the 2^{nd} electric pole (35) piercing the cover through the 1,2^{nd} pipes (44)(45) up and down the cover in front of the thin walled tube (10), the rear cover (50) with the 1^{st} electric pole (34) and 2^{nd} electric pole (35) piecing through the 3,4^{th} pipes (54)(55) at the upper and lower part of the rear water flowing pipe (51) at the center of the rear cover (50) at the back of the thin walled tube (10), insulating gaskets (47)(57) on the 1,2^{nd} electric pole (34)(35) connecting the 1,2^{nd} pipes (44)(45) and the 3,4rh pipes (54)(55), and the heat radiant plate (60) containing a number of heat radiant pins (62).

Front sealing plate (46) is applied in middle of the front cover (10) and the thin walled tube (40) to seal between the front cover (40) and the thin walled tube (10) and the rear sealing plate is set up to seal the rear cover (50) and the thin walled tube (10). The front and rear sealing plates (46) (56) and the front and rear covers (40) (50) are likely to be made of insulating metal.

The 1^{st} thermal conduction plate(70) is formed between the insulation pipe (20) and the thin walled tube (10) to deliver the heat produced while the electrolysis to the thin walled tube (10) through the insulation pipe (20) efficiently. Also the 2^{nd} thermal conduction plate (80) is formed between the heat radiant plate (60) and the thin walled tube (10) to transfer the heat from the thin walled tube (10) to the heat radiant plate (60). The thin walled tube (10) can be in any shape; circular, rectangular, hexagonal and so on. It can also be formed by metals such as stainless or alloy steel. In the invention explained above, the thin walled tube (10) is in a circular shape and has frontal and rear flanges (10a) (10b) on both sides. This thin walled tube (10) would be the body of the product.

The insulation pipe (20), adhered inside the thin walled tube (10), insulates the insulation pipe (20) and the electrolyte plate (30). The insulation pipe (20) is favorably composed of materials in which the properties may not be altered during the electrolysis of water, such as Teflon rubber, acetal, or PP, PE substances.

As drawn, the 1^{st} big hole (31b) and the 1^{st} small hole (31c) are formed around the center hole (31a) at the center of the 1^{st} electrolyte plate (31). At this point, the cylindrical surface area inside the 1^{st} small hole (31c) touch the 1^{st} electric pole (34) but because the diameter of the 1^{st} big hole (31b) is larger than that of the 1^{st} small hole (31c), the inner surface are of the 1^{st} big hole (31b) does not touch the 1^{st} electric pole (34). Also, the 2^{nd} big hole (32b) and the 2^{nd} small hole (32c) are formed around the center hole (32a) at the center of the 2^{nd} electrolyte plate (32). At this point, the cylindrical surface area inside the 2^{nd} small hole (32c) touch the 2^{nd} electric pole (35) but because the diameter of the 2^{nd} big hole (32b) is larger than that of the 2^{nd} small hole (32c), the inner surface are of the 2^{nd} big hole (32b) does not touch the 2^{nd} electric pole (35). The center holes (31a)(32a) on the 1^{st} electrolyte plate (31) and the 2^{nd} electrolyte plate (32) are shaped as cylinders so water could flow by.

The ring with a certain thickness (33) are the rings with the same diameter as the 1,2^{nd} electrolyte plates (31) (32) and separates the 1^{st} electrolyte plate (31) and the 2^{nd} electrolyte plate (32) so they would not touch each other. In the example, the 1,2^{nd} electrolyte plates (31) (32) and the ring with a certain thickness have width of 3mm.

The 1,2^{nd} electric poles (34) (35) have bolts at the end of each pole.

According to the structure described, the 1^{st} and the 2^{nd} electrolyte plates (31)(32) are placed alternatively between the rings (33) and the 1^{st} electric pole (34) 9s connected to the 1^{st} electrolyte plate (31) electrically and the 2^{nd} electric pole (35) is connected to the 2^{nd} electrolyte plate(32).

On the 1, 2^{nd} pipes (44)(45) of the front cover (40) and the 3,4^{th} pipes (54)(55) on the rear cover (50), a terminal bolt (37) joining the cluster of bolts (34a)(35a) and the 1,2^{nd} electric poles (34)(35) can be installed. The terminal bolt (37) is pierced through the 1,2,3,4^{th} pipes (44)(45)(54)(55) and is composed of the bolt's (37a) which connects the 1,2^{nd} electric poles (34)(35) and the cluster of bolts (34a)(35a) and the bolt's head (37b) connected to the wire exposed outside the front and rear covers (40)(50) transferring electricity. The overall diameter is larger then the 1,2^{nd} electric poles (34)(35).

The hydrogen-oxygen mixed gas generator in the example uses low voltage of DC 1-12 V but still dozens of amperes are used. As a result, the terminal wired to the 1,2^{nd} electric pole (34)(35) produce massive amount of heat. The 1,2^{nd} electric pole can manage some heat since they are under the water but the terminal above the water can damage the coating of the wires due to lots of heat. To prevent it, the terminal bolt (37) with larger diameter then the 1,2^{nd} electric poles is used. The terminal bolt's (37) body (37a) would radiate some heat by sinking into the water in the thin walled tube (10) decrease the heat produced due to the larger diameter of the bolt's head (37b) then that of the 1,2^{nd} electric poles (34)(35).

The electrolyte plates (31) should be made from a material that can carry electrolysis effectively. One of the materials would be carbon nano-tube alloy steel. Carbon nano-tube alloy steel is formed when carbon nano-tube, nickel, and tourmaline powdered and compressed in a form of electrode plate and ignited. Sodium decarboxylation chemical composition may be added and the ignition is carried at 1300 °C.

The electrolyte plates (31) can also be made from stainless steel which would carry out the electrolysis effectively and also separate the hydrogen-oxygen bubbles when polished by nano-technology the electrolyte plate (31) is made in metals such as stainless steel or alloy steels.

Nano-technology mean polishing electrolyte plate's (31) surface by nano units. Polishing by nano technology would minimize the electrode plate's surface friction, making hydrogen or oxygen gas bubbles to separate easily. The technical, thermal, electrical, magnetic, and optical properties change when the size of the matter decreases from bulk to nano meter, making electrolysis on water effortless.

On the surface of electrolyte plate (31), tourmaline catalyst can be attached. The tourmaline catalyst would be grinded into micro to nanometer powder, burned in 1300 °C and glued to the electrolyte plate(31). Tourmaline is a mineral under the hexagonal system like crystal; electricity forms by friction, produce massive amount of anion, and catalyzes the electrolysis producing lots of hydrogen and oxygen. Tourmaline becomes a catalyst with many tiny pores that can increase the contact area with electrolyte after being powdered and burned. The tourmaline catalyst can promote the electrolysis of electrolytes when attached on the electrolyte plate (31).]

The front cover (40) is joined with the frontal flange (10a) to insulate by the frontal sealing plate (46) in front of the thin walled tube (10), bolts (B) and nuts (). Also, the rear cover (50) is joined with the rear flange (10b) to insulate by the rear sealing plate (56) at the back of the tube (10), bolts (B), and nuts (N). The front and rear water flowing pipes (41)(51) are set up opposite to the center holes (31a)(32a) on the 1,2^{nd} electrolyte plates (31)(32) so when water is flowing into the front or the rear water flowing pipe (41)(51), the water mixed with the hydrogen-oxygen mixed gas goes out to the other pipe.

As drawn in the diagram 2 and 3, the front sealing plate (46) includes the front gasket (46a) between the front cover (40) and the front flange (10a) and the front gasket ring (46b) installed on the front of the front cover (40) and the back of the front flange (10a) by the bolts (B) and Nuts (N).

As drawn in the diagram 2 and 3, the rear sealing plate (56) includes the rear gasket (56a) between the rear cover (50) and the rear flange (10b) and the rear gasket ring (56b) installed on the front of the rear cover (50) and the back of the rear flange (10b) by the bolts (B) and nuts (N).
The insulating gaskets (47)(57) play insulators disconnecting electricity flowing from the 1,2^{nd} pipes (34)(35) and seals to prevent a leak as they are connected to the 1,2^{nd} pipes (44)(45) and the 3,4^{th} pipes (54)(55). The insulating gaskets (47)(57) contain the bodies of the gaskets (47a)(57a) on the 1,2,3,4^{th} pipes (44)(45)(54)(55) and gasket flanges (47b)(57b) which has bigger diameter than that of the gaskets (47a)(57a) on the outside of the front and rear covers (40)(50). The material can be insulating Teflon.

The heat radiant plate (60) is composed of the heat radiant pipe (61) on the thin walled tube (10) in between the front and rear covers (40)(50) and the multiple heat radiant pins (62) placed apart from each other on the heat radiant pipe (61). The heat radiant pipe (61) and the pins (62) can be formed by polishing round aluminum or stainless pipes by NC machine, using casting, or sculpturing the heat resistant plastic or ceramics.

But in forming the heat radiant plate (60), the heat radiant pipe (61) and the pins (62) can be made separately and connected later on. Furthermore, to increase the heat resistance on the heat radiant plate (60), carbon nano-tube or tourmaline catalyst in nanometer size, preferably in 10-60 nanometers, can be applied alone or together.

The 1^{st} thermal conduction plate transfers heat produced during the electrolysis to the thin walled tube (10) through the insulating pipe (20). The 2^{nd} thermal conduction plate delivers the heat transferred to the thin walled tube (10) to the heat radiant plate (60) efficiently. To accomplish the goals, the 1,2^{nd} thermal conduction plates (70)(80) have carbon nano-tube and tourmaline catalysts, preferably in size of 10-6- nanometers, applied.

According to the structure described, if electric current is provided to the 1,2^{nd} electric poles (35)(45) when water is flowing in either front or rear water flowing pipes (41)(51), - and + electric charge is formed on the surfaces of the 1,2^{nd} electrolyte plates (31)(32), and the magnetic field is created between the 1,2^{nd} electrolyte plates (31)(32). The electric space, where electrolysis is carried, becomes the place where magnetic field is formed and the total electric space expands according to the number of the 1,2^{nd} electrolyte plates (31)(32) so the electrolysis becomes active, producing lots of hydrogen and oxygen gas. The hydrogen-oxygen gas produced goes out through one of the front or the rear water flowing pipes after mixed together.

The invention is explained based on the example experimented but keep in mind that this is only one of the possibilities and anyone with sufficient knowledge in the field would understand that variations can be applied.

### Signs regarding important parts of the figures

- 10: - thin walled tube
- 10a, 10b: - front and rear flange
- 20: - insulation pipe
- 30: - electrolyte unit
- 31: - the 1^{st} electrolyte plate
- 31a: - center hole
- 31b: - the 1^{st} big hole
- 31c: - the 1^{st} small hole

- 32: - the 2^{nd} electrolyte plate
- 32a: - center hole
- 32b: - the 2^{nd} big hole
- 32c: - the 2^{nd} small hole
- 33: - ring with a certain thickness
- 34,35: - the 1,2^{nd} electric poles
- 34a,35a: - cluster of bolts
- 37: - terminal bolts
- 37a: - bolt's body
- 37b: - bolt's head
- 40: - front cover
- 41: - front water flowing pipe
- 44,45: - the 1,2^{nd} pipe
- 46: - front sealing plate
- 46a: - front gasket
- 46b: - front gasket ring
- 56: - rear sealing plate
- 56a: - rear gasket
- 56b: - rear gasket ring
- 47,57: - insulation gasket
- 47a,47b: - body of gasket
- 57a,57b: - gasket flange
- 50: - rear cover
- 51: - rear water flowing pipe
- 54,55: - the 3,4^{th} pipes
- 60: - heat radiant plate
- 61: - heat radiant pipe
- 62: - heat radiant pin
- 70: - the 1^{st} thermal conduction plate
- 80: - the 2^{nd} thermal conduction plate

## Claims

**1.** A hydrogen-oxygen generating apparatus comprising a metal thin walled tube (10);
an insulation tube(20) inside the thin walled tube (10);
the multiple 1^{st} electrolyte plate (31) that has the 1^{st} small hole (31c) placed at the lower part of the center hole (31a) and the first big hole (31b) place on the upper part of the center hole (31a), multiple 2^{nd} electrolyte plates(32) with the small hole (32c) on the upper part of the center hole (32a) and the 2^{nd} big hole (32b) on the lower part of the center hole (32b), a number of rings with a certain thickness (33) between the 1^{st} electrolyte plate (31) and the 2^{nd} electrolyte plate(32), the electrolyte unit (30) including the 1^{st} electric pole (34) penetrating the 1^{st} small holes (31c) and the 2^{nd} electric pole (35) penetrating the 2^{nd} small holes (32c) as the 1^{st} electrolyte plate (31) and the 2^{nd} electrolyte plate (32) are place opposed to each other;
the front cover (40) with the frontal water flowing pipe (41) at the center and the 1^{st} electric pole (34) and the 2^{nd} electric pole (35) piercing the cover through the 1,2^{nd} pipes (44)(45) up and down the cover in front of the thin walled tube (10);
the rear cover (50) with the 1^{st} electric pole (34) and 2^{nd} electric pole (35) piecing through the 3,4^{th} pipes (54)(55) at the upper and lower part of the rear water flowing pipe (51) at the center of the rear cover (50) at the back of the thin walled tube (10);
the insulating gaskets (47)(57) on the 1,2^{nd} electric pole (34)(35) connecting the 1,2^{nd} pipes (44)(45) and the 3,4rh pipes (54)(55);
and the heat radiant plate (60) containing a number of heat radiant pins (62).

**2.** A hydrogen-oxygen generating apparatus according to claim 1, further comprising a front sealing plate (46) applied in middle of the front cover (40) and the thin walled tube (10) to seal between the front cover (40) and the thin walled tube (10);
and the rear sealing plate applied in middle of the rear cover(50) and the thin walled tube(10) to seal the rear cover (50) and the thin walled tube (10).

**3.** A hydrogen-oxygen generating apparatus according to claim 2, wherein the front sealing plate (46) includes the front gasket (46a) between the front cover (40) and the front flange (10a) and the front gasket ring (46b) installed on the front of the front cover (40) and the back of the front flange (10a) by the bolts (B) and Nuts (N); and
the rear sealing plate (56) includes the rear gasket (56a) between the rear cover (50) and the rear flange (10b) and the rear gasket ring (56b) installed on the front of the rear cover (50) and the back of the rear flange (10b) by the bolts (B) and nuts (N).

**4.** A hydrogen-oxygen generating apparatus according to claim 1, in which the electrolyte plates (31) is made from carbon nano-tube alloy steel.

**5.** A hydrogen-oxygen generating apparatus according to claim 1, the surface of the electrolyte plates (31) is polished by nano-technology to carry out the electrolysis effectively and also to separate the hydrogen-oxygen bubbles.

**6.** A hydrogen-oxygen generating apparatus according to claim 1, on the surface of electrolyte plate (31), tourmaline catalyst is attached.
